(19) Europäisches Patentamt
European Patent Office
Office européen des brevets

(11) EP 0 907 683 B1

(12) # EUROPÄISCHE PATENTSCHRIFT

(45) Veröffentlichungstag und Bekanntmachung des Hinweises auf die Patenterteilung:
**28.03.2001 Patentblatt 2001/13**

(21) Anmeldenummer: **97929219.0**

(22) Anmeldetag: **19.06.1997**

(51) Int Cl.[7]: **C08L 83/04**, C08K 5/54, C08G 77/04, C07F 7/08

(86) Internationale Anmeldenummer:
**PCT/EP97/03197**

(87) Internationale Veröffentlichungsnummer:
**WO 97/49767 (31.12.1997 Gazette 1997/57)**

(54) **VERNETZBARE ORGANOPOLYSILOXANMASSEN**
CROSSLINKABLE ORGANOPOLYSILOXANE MATERIALS
MATIERES RETICULABLES A BASE D'ORGANOPOLYSILOXANES

(84) Benannte Vertragsstaaten:
**BE DE FR GB**

(30) Priorität: **26.06.1996 DE 19625654**

(43) Veröffentlichungstag der Anmeldung:
**14.04.1999 Patentblatt 1999/15**

(73) Patentinhaber: **Wacker-Chemie GmbH**
**81737 München (DE)**

(72) Erfinder:
- **BARTHEL, Herbert**
  **D-84547 Emmerting (DE)**
- **ALTENBUCHNER, August**
  **A-5121 St. Radegund (AT)**
- **SCHUSTER, Johann**
  **D-84547 Emmerting (DE)**
- **HEINEMANN, Mario**
  **D-84489 Burghausen (DE)**
- **EISMANN, Lutz**
  **D-84547 Emmerting (DE)**
- **ROTHENAICHER, Otto**
  **D-84367 Zeilarn (DE)**

(74) Vertreter: **Budczinski, Angelika et al**
**c/o Wacker-Chemie GmbH,**
**Zentralabteilung PML,**
**Hanns-Seidel-Platz 4**
**81737 München (DE)**

(56) Entgegenhaltungen:
**EP-A- 0 217 333** **EP-A- 0 291 871**
**EP-A- 0 575 863** **EP-A- 0 628 617**
**EP-A- 0 651 021** **EP-A- 0 693 533**
**WO-A-93/17654** **DE-A- 2 422 846**
**DE-A- 2 609 681** **DE-A- 4 113 554**
**DE-A- 19 545 363** **US-A- 3 361 714**

- **PATENT ABSTRACTS OF JAPAN vol. 013, no. 510 (C-654), 15.November 1989 & JP 01 203467 A (SHIN ETSU CHEM CO LTD), 16.August 1989,**

Bemerkungen:
Die Akte enthält technische Angaben, die nach dem Eingang der Anmeldung eingereicht wurden und die nicht in dieser Patentschrift enthalten sind.

EP 0 907 683 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft vernetzbare Organopolysiloxanmassen, die unter Zusatz niedermolekularer siliciumorganischer Verbindungen hergestellt werden.

Der Begriff Organopolysiloxane soll im Rahmen der vorliegenden Erfindung dimere, oligomere und polymere Siloxane umfassen.

In DE-B 24 22 846 (Rhone-Poulenc S.A.; ausgegeben am 23. April 1976) bzw. den entsprechenden US-A 3,933,729 und US-A 3,983,265 werden kondensationsvernetzbare Organopolysiloxanmassen beschrieben, die zur Haftungsverbesserung 10 bis 50 Teile MQ-Harz mit einem Verhältnis von Triorganosiloxyeinheiten (M-Einheiten) zu $SiO_4/_2$-Einheiten (Q-Einheiten) von kleiner oder gleich 1,2 aufweisen.

EP-A 217 333 (Dow Corning Corp.; ausgegeben am 18.10.89) offenbart ein Verfahren zur Herstellung von kondensationsvernetzenden RTV-1-Massen auf der Basis von mit Hydroxylgruppen terminiertem Poly(trifluorpropyl) methylsiloxan, Kieselsäure und 1,3-Bis-(3,3,3-trifluorpropyl) -tetramethyldisilazan.

In DE-A-42 16 139 (Wacker-Chemie GmbH; ausgegeben am 18. November 1993) bzw. der entsprechenden US-Anmeldung mit der Seriennummer USSN 08/313192 werden MQ-Harze mit einem Verhältnis von M- zu Q-Einheiten von kleiner oder gleich 1 beschrieben. Aus diesen Harzen können Pulver mit einer Partikelgröße von beispielsweise 1-100 µm hergestellt werden. Das Molekulargewicht liegt dabei insbesondere zwischen 500 und 10 000 g/Mol.

In der deutschen Anmeldung mit dem Aktenzeichen 195 45 363.8 (Wacker-Chemie GmbH; angemeldet am 5.12.1995) wird der Einsatz von niedermolekularen Organesiliclumverbindungen mit aliphatisch ungesättigten Resten in vernetzbaren Massen auf der Basis von Organopolysiloxanen beschrieben.

WO 93/17654 beschreibt additionsvernetzende Dentalmassen und die Zugabe von Harzen mit M- und Q-Bestandteilen mit einem Molekulargewicht von 100 - 100.000. EP-A-0 291 871 beschreibt die Herstellung von H-Siloxanen mit 3 - 5 Si-Atomen und deren Einsatz als Baustein der chemischen Synthese (Hydrosilylierung) und in Organopolysiloxanen als Haftvermittler. DE-A-26 09 681 beschreibt die Herstellung von niedermolekularen SiOH-Siloxanen und ihren späteren Einsatz wobei der Silanolgehalt der niedermolekularen Siloxane 6,5 < OH < 14 Gew% beträgt. JP-A-01203467 beschreibt den Einsatz von Siloxanen aus D-Einheiten im peroxidisch vernetzenden HTV-Kautschuk als Additiv. DE-A-41 14 554 beschreibt die Herstellung von H-Siloxanen mit 3 - 1000 Si-Atomen und deren Einsatz als Haftvermittler im Siliconkautschuk. EP-A-0 693 533 und EP-A-0 575 863 beschreiben jeweils kondensationsvernetzende Massen. US-A-3 361 714 beschreibt peroxidisch vernetzende HTV- Massen und den Einsatz von Verbindungen vom Typ $M_aD_bT_c$. EP-A-0 651 021 beschreibt additionsvernetzende Massen und den Einsatz von MQ-Harz mit M:Q von 1:1 zu 2:1, bestehend aus M und Q Einheiten, wobei gemäß Seite 4, Zeilen 51-55 herstellungsbedingt kleine Mengen an niedermolekularen MQ-Harzen vorhanden sein können. EP-A-0 628 617 beschreibt hochtemperaturkondensations-vernetzende Massen und beschreibt den Einsatz von festen MQ-Verbindungen mit M:Q von 0,5:1 zu 1,2:1, bestehend aus M und Q Einheiten.

Gegenstand der Erfindung sind vernetzbare Massen auf der Basis von Organopolysiloxanen, dadurch gekennzeichnet, daß sie zusätzlich zu Organopolysiloxanen mindestens eine niedermolekulare Organosiliciumverbindung mit 2 bis 17 Siliciumatomen aus Einheiten der Formel

$$R^1_aR^2_b(OR^3)_cSiO_{4-(a+b+c)/2} \qquad (I)$$

enthalten, wobei

- $R^1$ gleich oder verschieden sein kann und aliphatisch gesättigter, SiC-gebundener Kohlenwasserstoffrest mit 1 bis 13 Kohlenstoffatomen bedeutet,
- $R^2$ gleich oder verschieden sein kann und aliphatisch gesättigter, mit Halogenatomen substituierter sic-gebundener Kohlenwasserstoffrest mit 1 bis 18 Kohlenstoffatomen bedeutet,
- $R^3$ Wasserstoffatom bedeutet,
- a 0, 1, 2 oder 3 ist,
- b 0, 1, 2 oder 3 ist,
- c 0, 1, 2 oder 3 ist und

die Summe aus a, b und c in Formel (I) kleiner oder gleich 3 ist, mit der Maßgabe, daß niedermolekulare Organosiliciumverbindungen aus Einheiten der Formel (I) mit b=0 mindestens eine Einheit der Formel (I), in der a gleich 0 oder 1 ist, und mindestens eine Einheit der Formel (I), in der a gleich 3 ist, in Mengen von 0,1 bis 5 Gewichts %, bezogen auf das Gesamtgewicht der vernetzbaren Masse, aufweisen.

Die erfindungsgemäß eingesetzten niedermolekularen Organosiliciumverbindungen besitzen ein Molekulargewicht von vorzugsweise 150 bis 2500 g/Mol, besonders bevorzugt von 150 bis 1500 g/Mol, insbesondere von 150 bis 500 g/Mol.

Die erfindungsgemäß eingesetzten niedermolekularen Organosiliciumverbindungen zeigen bevorzugt einen Siedepunkt von größer 200°C bei einem Druck zwischen 900 und 1100 hPa.

Beispiele für $R^1$ gleich aliphatisch gesättigter Kohlenwasserstoffrest sind Alkylreste, wie der Methylrest, der Ethylrest, Propylreste wie iso- oder n-Propylrest, Butylreste wie tert.- oder n-Butylrest, Pentylreste wie neo-, iso- oder n-Pentylreste, Hexylreste wie n-Hexylrest, Heptylreste wie n-Heptylrest, Octylreste wie 2-Ethylhexyl- oder n-Octylrest, Decylreste wie n-Decylrest, Dodecylreste wie n-Dodecylrest, Hexadecylreste wie n-Hexadecylrest und Octadecylreste wie n-Octadecylrest, Arylreste wie Phenyl-, Biphenyl- oder Naphthenylrest, Alkylarylreste wie Benzyl-, Ethylphenyl-, Toluyl- oder die Xylylreste.

Bevorzugt handelt es sich bei Rest $R^1$ um aliphatisch gesättigte Kohlenwasserstoffreste mit 1 bis 18 Kohlenstoffatomen, besonders bevorzugt um Methylrest, Phenylrest und Octylrest, insbesondere schon aus Gründen der Verfügbarkeit um den Methylrest.

Beispiele für Rest $R^2$ sind halogenierte aliphatisch gesättigte Alkylreste wie der 3-Chlorpropyl-, der 3,3,3-Trifluor-n-propyl-, der 2,2,2,2`,2`,2`-Hexafluorisopropyl-, der Heptafluorisopropyl- oder der Perfluorhexylethylrest, halogenierte Arylreste wie der o-, m-, p-Chlorphenyl oder o-,m-,p-Chlorbenzylrest.

Bevorzugt handelt es sich bei Rest $R^2$ um den 3,3,3-Trifluorpropylrest und den Perfluorhexylethylrest, wobei der 3,3,3-Trifluorpropylrest schon aus Gründen der Verfügbarkeit besonders bevorzugt ist.

Bei den erfindungsgemäß eingesetzten Organosiliciumverbindungen kann es sich um verzweigte, lineare oder cyclische Siloxane handeln, mit der Maßgabe, daß niedermolekulare Organosiliciumverbindungen aus Einheiten der Formel (I) mit b=0 mindestens eine Einheit der Formel (I), in der a gleich 0 oder 1 ist, und mindestens eine Einheit der Formel (I), in der a gleich 3 ist, aufweisen.

Bevorzugt handelt es sich bei den erfindungsgemäß eingesetzten niedermolekularen Organosiliciumverbindungen um solche, die aus M-Einheiten, d.h. Einheiten der Formel (I) mit a+b=3, sowie Q-Einheiten, d.h. Einheiten der Formel (I) mit a+b=0, und/oder T-Einheiten, d.h. Einheiten der Formel (I) mit a+b=1, bestehen, wobei das zahlenmäßige Verhältnis von M-Einheiten zur Summe der Q-Einheiten und/oder T-Einheiten größer oder gleich 1 ist, bevorzugt größer oder gleich 2 ist, besonders bevorzugt größer oder gleich 2,5 ist, und um solche, die aus Einheiten der Formel (I) mit a=b=1 sowie gegebenenfalls Einheiten der Formel (I) mit a=b=c=1 bestehen.

Besonders bevorzugt handelt es sich bei den erfindungsgemäß eingesetzten niedermolekularen Organosiliciumverbindungen um solche, die aus M-Einheiten, d.h. Einheiten der Formel (I) mit a+b=3, und Q-Einheiten, d.h. Einheiten der Formel (I) mit a+b=0, bestehen, wobei das zahlenmäßige Verhältnis von M-Einheiten zu Q-Einheiten größer oder gleich 1 ist, bevorzugt größer oder gleich 2 ist, besonders bevorzugt größer oder gleich 2,5 ist.

Die erfindungsgemäß eingesetzten niedermolekularen Organosiliciumverbindungen enthalten vorzugsweise mindestens eine Einheit der Formel (I) mit c verschieden 0.

Besonders bevorzugt weisen die erfindungsgemäß eingesetzten niedermolekularen Organosiliciumverbindungen 3 bis 9 Siliciumatome auf.

Beispiele für die erfindungsgemäß eingesetzten niedermolekularen Organosiliciumverbindungen sind
$[(CH_3)_3SiO]_4Si$, $[(CH_3)_3SiO]_3SiOH$, $[(CH_3)_3SiO]_2Si(OH)_2$,
$\{[(CH_3)_3SiO]_3Si)\}_2O$, $[(CH_3)_3SiO]_2Si(OH)OSi[(CH_3)_3SiO]_3$,
$\{[(CH_3)_3SiO]_2Si(OH)\}_2O$, $\{[(CH_3)_3SiO]_2SiO\}_3$,

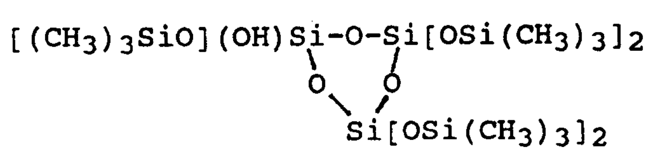

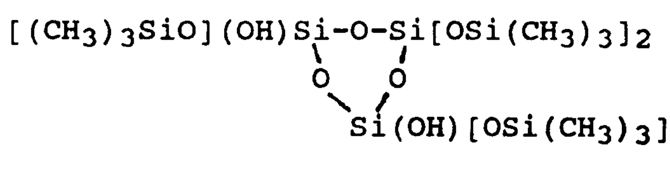

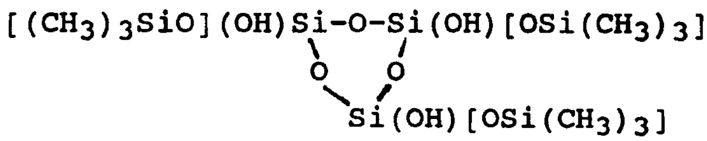

$[(CF_3CH_2CH_2)(CH_3)_2SiO][(CH_3)_3SiO]_3Si$,
$[(CF_3CH_2CH_2)(CH_3)_2SiO]_3[(CH_3)3SiO]_2Si$,
$[(CF_3CH_2CH_2)(CH_3)_2SiO]_3[(CH_3)_3SiO]Si$,
$[((CF_3CH_2CH_2)(CH_3)_2SiO]_4Si$,
$[(CF_3CH_2CH_2)(CH_3)_2SiO][(CH_3)_3SiO]_2SiOH$,
$[(CF_3CH_2CH_2)(CH_3)_2SiO]_2[(CH_3)_3SiO]SiOH$,
$[(CF_3CH_2CH_2)(CH_3)_2SiO]_3SiOH$,
$[[(CF_3CH_2CH_2)(CH_3)_2SiO]_3SiOSi[[(CF_3CH_2CH_2)(CH_3)_2SiO]_3$,
$[(CF_3CH_2CH_2)(CH_3)_2SiO]_2[(CH_3)_3SiO]SiO--Si[(CF_3CH_2CH_2)(CH_3)_2SiO]_3$
$[(CF_3CH_2CH_2)(CH_3)_2SiO][(CH_3)_3SiO]_2SiO- -Si[(CF_3CH_2CH_2)(CH_3)_2SiO]_3$ und Isomere,
$[(CH_3)_3SiO]_3SiOSi[(CF_3CH_2CH_2)(CH_3)_2SiO]_3$ und Isomere,
$[(CH_3)_3SiO]_3SiOSi[(CH_3)_3SiO][(CF_3CH_2CH_2)(CH_3)_2SiO]_2$ und Isomere,
$[(CF_3CH_2CH_2)(CH_3)_2SiO]_2Si(OH)OSi[(CF_3CH_2CH_2)(CH_3)_2SiO]_3$,
$[(CF_3CH_2CH_2)(CH_3)_2SiO]_2Si(OH)OSi(OH)[(CF_3CH_2CH_2)(CH_3)_2SiO]_2$,
$[(CF_3CH_2CH_2)(CH_3)_2SiO][(CH_3)_3SiO]Si(OH)O-Si[(CF_3CH_2CH_2)(CH_3)_2SiO]_3$ und Isomere,
$[(CH_3)_3SiO]_2Si(OH)OSi[(CF_3CH_2CH_2)(CH_3)_2SiO]_3$ und Isomere,
$[(CH_3)_3SiO]_2Si(OH)OSi[(CH_3)_3SiO][(CF_3CH_2CH_2)(CH_3)_2SiO]_2$ und Isomere,
$[(CF_3CH_2CH_2)(CH_3)SiO]_{3-15}$ und deren Gemische sowie
$HO-[(CF_3CH_2CH_2)(CH_3)SiO]_{2-15}-H$ und deren Gemische.

Insbesondere handelt es sich bei den erfindungsgemäß eingesetzten niedermolekularen Organosiliciumverbindungen um
$[(CH_3)_3SiO]_3SiOH$, $\{[(CH_3)_3SiO]_2Si(OH)\}_2O$ und HO
$[(CF_3CH_2CH_2)(CH_3)SiO]_3-H$.

Zur Herstellung der erfindungsgemäß eingesetzten niedermolekularen Organosiliciumverbindungen bzw. der erfindungsgemäß eingesetzten Organosiliciumverbindungen aus Einheiten der Formel (I) können in der Silikonchemie bekannte Verfahrensweisen angewendet werden, wie beispielsweise in D. Hoebbel et al., Z. anorg. allg. Chem. 424 (1976) 115 ff beschrieben bzw. analog den in der eingangs zitierten deutschen Patentanmeldung mit dem Aktenzeichen 195 45 363.8 beschriebenen Verfahren.

Bei den erfindungsgemäß eingesetzten niedermolekularen organosiliciumverbindungen kann es sich um eine einzelne Art wie um ein Gemisch aus mindestens zwei verschiedenen Arten derartiger Organosiliciumverbindungen handeln.

Bei den erfindungsgemäßen Massen kann es sich um beliebige, bisher bekannte Typen von zu Elastomeren vernetzbaren Organopolysiloxanmassen handeln, wie beispielsweise einkomponentige oder zweikomponentige bei Raumtemperatur (sog. RTV-Massen) oder erhöhter Temperatur (sog. HTV-Massen) vulkanisierbare Organopolysiloxanmassen, wobei die Vernetzung durch Kondensation, Anlagerung von Si-gebundenem Wasserstoff an aliphatische Mehrfachbindung oder peroxidisch durch Bildung von Radikalen erfolgen kann. Die vernetzbaren Organopolysiloxanmassen können dabei frei von Füllstoffen sein, können aber auch mit aktiven oder nicht aktiven Füllstoffen gefüllt sein.

Art und Menge der üblicherweise in solchen Massen verwendeten Komponenten sind bereits bekannt. Hierzu sei beispielsweise auf DE-A 41 39 148 (Wacker-Chemie GmbH; ausgegeben am 3.6.93) bzw. die entsprechende US 5,268,441, die deutsche Anmeldung DE-A 44 01 606 (Wacker-Chemie GmbH; angemeldet am 20. Januar 1994) bzw. die entsprechende US-Anmeldung mit der Seriennummer USSN 08/368183, die deutsche Anmeldung DE-A 44 05 245 (Wacker-Chemie GmbH; angemeldet am 18.2.1994) und DE 43 36 345 A (Wacker-Chemie GmbH; ausgegeben am 27. April 1995) bzw. die entsprechende US-Anmeldung mit der Seriennummer USSN 08/326903 verwiesen.

Bei den erfindungsgemäßen durch Kondensation vernetzbaren Massen handelt es sich vorzugsweise um unter Ausschluß von Wasser lagerfähige, bei Zutritt von Wasser bei Raumtemperatur zu Elastomeren vernetzbare Organopolysiloxanmassen, die

(a) kondensationsfähige Gruppen aufweisendes Organopolysiloxan,
(b) Organosiliciumverbindung mit mindestens drei Si-gebundenen hydrolysierbaren Resten,

(c) Kondensationskatalysator,

(d) niedermolekulare Organosiliciumverbindung mit 2 bis 17 Siliciumatomen aus Einheiten der Formel (I)

und gegebenenfalls weitere Stoffe
enthalten.

Bei den erfindungsgemäßen durch Kondensation vernetzbaren Massen kann es sich um Einkomponenten-Massen wie auch um Zweikomponenten-Massen handeln, wobei in letzterer eine Komponente nicht gleichzeitig die Bestandteile (a), (b) und (c) enthält.

Als kondensationsfähige Gruppen aufweisendes Organopolysi loxan (a) wird vorzugsweise solches der allgemeinen Formel

$$HO(SiR_2O)_mSiR_2OH \qquad (II)$$

eingesetzt, wobei R gleiche oder verschiedene, gegebenenfalls substituierte einwertige Kohlenwasserstoffreste mit 1 bis 18 Kohlenstoffatomen je Rest bedeuten und m eine ganze Zahl im Wert von mindestens 50 ist.

Obwohl durch Formel (II) nicht dargestellt, können zusätzlich zu den Diorganosiloxaneinheiten ($SiR_2O$) noch andere Siloxaneinheiten vorliegen. Beispiele für solche anderen, meist lediglich als Verunreinigungen vorliegenden Siloxaneinheiten sind solche der Formeln $RsiO_{3/2}$, $R_3SiO_{1/2}$ und $SiO_{4/2}$, wobei R jeweils die oben dafür angegebene Bedeutung hat. Die Menge an solchen anderen Siloxaneinheiten als Diorganosiloxaneinheiten beträgt jedoch vorzugsweise höchstens 10 Molprozent, insbesondere höchstens 1 Molprozent, jeweils bezogen auf das Gewicht der Organopolysiloxane (a).

Die Organopolysiloxane (a) besitzen vorzugsweise eine Viskosität von 100 bis 500 000 $mm^2/s$ bei 25°C.

Beispiele für Reste R sind die oben für Rest $R^1$ und $R^2$ angegebenen Beispiele sowie aliphatisch ungesättigte Reste, wie der Vinyl- und der Allylrest, wobei R bevorzugt Methylrest und 3,3,3-Trifluorpropylrest, besonders bevorzugt Methylrest, bedeutet.

Als Organosiliciumverbindungen mit mindestens drei Si-gebundenen hydrolysierbaren Gruppen (b) werden vorzugsweise Silane der allgemeinen Formel

$$R_{4-n}SiZ_n \qquad (III)$$

und/oder deren 2 bis 10 Siliciumatome je Molekül aufweisende Teilhydrolysate verwendet,
wobei

R gleich oder verschieden sein kann und die oben angegebene Bedeutung hat,

n 3 oder 4 ist und

Z gleiche oder verschiedene hydrolysierbare Gruppen bedeutet, wie Amino-, Amido-, Aminoxy-, Oximogruppe, wie z.B.-ON=$C(CH_3)(C_2H_5)$, Alkoxy-, wie z.B. Methoxy- und Ethoxy-, Alkoxyalkoxy-, wie z.B. $CH_3$-O-$C_2H_5$-O-, Alkenyloxy-, wie z.B. $H_2C$=$(CH_3)$CO-, oder Acyloxy-, wie die Acetoxygruppe.

Bevorzugt handelt es sich bei der hydrolysierbaren Gruppe Z um Acetoxygruppe.

Die Organosiliciumverbindung (b) wird vorzugsweise in einer Menge von 2 bis 10 Gewichtsteilen je 100 Gewichtsteile Organopolysiloxan (a) eingesetzt.

Vorzugsweise handelt es sich bei dem Kondensationskatalysator (c) um (Organo-)Metallverbindungen, wie beispielsweise die Salze von Carbonsäuren, die Alkoholate und die Halogenide der Metalle Pb, Zn, Zr, Ti, Sb, Fe, Cd, Sn, Ba, Ca und Mn, wie Zinn(II)octoat, Dibutylzinndilaurat, Octylzinntriacetat, Dioctylzinndioctoat, Dioctylzinndiacetat, Didecylzinndiacetat, Dibutylzinndiacetat, Dibutylzinndibromid, Dioctylzinndilaurat, Trioctylzinnacetat, Titanalkoholat und Organotitanverbindungen mit mindestens einer Si-O-Ti-Bindung, sowie Katalysatoren gemäß der oben zitierten DE-A 41 39 148.

Kondensationskatalysator (c) wird vorzugsweise in einer Menge von 0,1 bis 2 Gewichtsteilen je 100 Gewichtsteile Organopolysiloxan (a) eingesetzt.

Bei der als Komponente (d) erfindungsgemäß eingesetzten niedermolekularen Organosiliciumverbindung aus Einheiten der Formel (I) handelt es sich vorzugsweise um $[(CH_3)_3Sio]_3SioH$, $\{[(CH_3)_3SiO]_2SiOH\}_2O$ und $\{[(CH_3)_3SiO]Si(OH)O\}_3$, wobei $[(CH_3)_3SiO]_3SiOH$ besonders bevorzugt ist.

Erfindungsgemäß eingesetzte niedermolekulare Organosiliciumverbindung (d) wird vorzugsweise in einer Menge von 0,1 bis 10 Gewichtsteilen je 100 Gewichtsteile Organopolysiloxan (a) verwendet.

Der jeweiligen Anwendung entsprechend können den erfindungsgemäßen zu Elastomeren vulkanisierbaren Organopolysiloxanmassen weitere Stoffe (e) zugesetzt werden.

Beispiele für solche weiteren Stoffe (e) sind Füllstoffe, wie z.B. nicht aktive Füllstoffe, Stoffe zur Verbesserung der Oberflächeneigenschaften, wie Haftvermittler, Verarbeitungshilfsmittel, wie etwa Weichmacher, Pigmente, lösliche Farbstoffe, Duftstoffe, Fungicide, rein organische Harze, Korrosionsinhibitoren, Oxidationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wobei es sich bei Komponente (e) bevorzugt um Füllstoffe, Weichmacher und Haftvermittler handelt.

Beispiele für verstärkende Füllstoffe, die als weitere Stoffe (e) eingesetzt werden können, sind pyrogene oder gefällte Kieselsäuren mit BET-Oberflächen von mindestens 50 $m^2/g$ sowie Furnace-Ruß und Acetylen-Ruß.

Die genannten Kieselsäurefüllstoffe können hydrophilen Charakter haben oder nach bekannten Verfahren hydrophobiert sein. Hierzu sei beispielsweise auf DE 38 39 900 A (Wacker-Chemie GmbH; angemeldet am 25.11.1988) bzw. die entsprechende US-A 5,057,151 verwiesen. Im allgemeinen erfolgt dann die Hydrophobierung mit 1 bis 20 Gew.-% Hexamethyldisilazan und/oder Divinyltetramethyldisilazan und 0,5 bis 5 Gew.-% Wasser, jeweils bezogen auf das Gesamtgewicht der Organopolysiloxanmasse, wobei diese Reagenzien vorteilhafterweise in einer geeigneten Mischvorrichtung, wie z.B. Kneter oder Innenmischer, zum bereits vorgelegten Organopolysiloxan gegeben werden, bevor die hydrophile Kieselsäure sukzessive in die Masse eingearbeitet wird.

Beispiele für nichtverstärkende Füllstoffe, die als weitere Stoffe (e) eingesetzt werden können, sind Quarzmehl, Diatomeenerde, Calciumsilikat, Zirkoniumsilicat, Zeolithe, Metalloxidpulver, wie Aluminium-, Titan-, Eisen- oder Zinkoxid, Bariumsilikat, Bariumsulfat, Calciumcarbonat, Gips sowie Kunststoffpulver, wie Polyacrylnitrilpulver oder Polytetrafluorethylenpulver. Des weiteren können als Füllstoffe faserige Komponenten, wie Glasfasern und Kunststoffasern, eingesetzt werden. Die BET-Oberfläche dieser Füllstoffe liegt vorzugsweise unter 50 $m^2/g$.

Beispiele für Weichmacher, die als Komponenete (e) eingesetzt werden können, sind mit Trimethylsilylgruppen oder Hydroxygruppen terminierte Polydimethylsiloxane mit einer Viskosität von maximal 1000 $mm^2/s$ bei 25°C oder auch Diphenylsilandiol.

Beispiele für Haftvermittler sind Aminosilane, wie Aminoethylaminopropyltriethoxysilan, oder Polysiloxane, die Aminoethylaminopropylsiloxygruppen enthalten.

Beispiele für Hitzestabilisatoren sind Übergangsmetallfettsäuresalze, wie Eisenoctoat, Übergangsmetallsilanolate, wie Eisensilanolat, sowie Cer(IV)-Verbindungen.

Darüberhinaus enthalten die erfindungsgemäßen durch Kondensation vernetzbaren Massen vorzugsweise keine weiteren Stoffe.

Bei den einzelnen in den erfindungsgemäßen Massen eingesetzten Komponenten kann es sich jeweils um eine Art dieser Komponenten wie auch um ein Gemisch aus mindestens zwei Arten dieser Komponenten handeln.

Die Herstellung der erfindungsgemäßen durch Kondensation vernetzbaren Organopolysiloxanmassen kann nach bekannten Verfahren erfolgen, wie beispielsweise durch einfaches Mischen der einzelnen Komponenten. Die Einarbeitung der erfindungsgemäß eingesetzten niedermolekularen Organosiliciumverbindungen kann dabei auf verschiedenen Wegen des Zumischens erfolgen, z.B. in einem beliebigen Schritt des Mischens der einzelnen Komponenten der Silikonkautschukmasse. Das Vermischen erfolgt vorzugsweise bei Raumtemperatur und vorzugsweise wird bei diesem Vermischen der Zutritt von Wasser vermieden. Falls gewünscht, kann dieses Vermischen aber auch bei höheren Temperaturen erfolgen, z.B. bei einer Temperatur im Bereich von 25 bis 80°C.

Falls Füllstoff eingesetzt wird, werden vorteilhafterweise zur Bereitung der erfindungsgemäßen durch Kondensation vernetzbaren Massen die niedermolekularen Organosiliciumverbindungen (d) während der Einarbeitung des Füllstoffes in die Masse eingemischt. Eine andere Möglichkeit ist das Aufbringen der erfindungsgemäß eingesetzten niedermolekularen Organosiliciumverbindung auf den Füllstoff durch Mischen in einem Pulvermischer oder durch Mischen in einer Suspension von Füllstoff, inertem organischen Lösungsmittel und niedermolekularer Organosiliciumverbindung und anschließendem Abziehen des organischen Lösungsmittels bis zur Trockene, um mit diesem anschließend, gleichermaßen mit dem Füllstoff als Träger, eingebracht zu werden. Eine weitere Möglichkeit besteht darin, daß die erfindungsgemäß eingesetzte niedermolekulare Organosiliciumverbindung durch chemische Reaktion auf dem Füllstoff erzeugt und auf diesem belassen wird.

Für die Vernetzung der erfindungsgemäßen Massen reicht der übliche Wassersgehalt der Luft aus. Die Vernetzung kann, falls erwünscht, auch bei höheren Temperaturen als Raumtemperatur, z.B. bei 25 bis 120°C, oder bei niedrigeren Temperaturen als Raumtemperatur, z.B. bei -10 bis 25°C, durchgeführt werden. Ebenso kann die Vernetzung auch bei Konzentrationen von Wasser durchgeführt werden, die den normalen Wassergehalt der Luft übersteigen.

Die erfindungsgemäßen Massen eignen sich als Abdichtungsmassen für Fugen, einschließlich senkrecht verlaufender Fugen und ähnlicher Leerräume mit lichten Weiten von z.B. 10 bis 40 mm, beispielsweise von Gebäuden, Land-, Wasser- und Luftfahrzeugen, oder als Klebstoffe und Verkittungsmassen, z.B. im Fensterbau, oder zur Herstellung von Schutzüberzügen, einschließlich solcher für Oberflächen, die der ständigen Einwirkung von Süßwasser oder Meerwasser ausgesetzt sind, oder zur Herstellung von klebrige Stoffe abweisenden Überzügen, einschließlich solcher

für Substrate, die in Kontakt mit Lebensmitteln gelangen, beispielsweise Verpackungsmaterial, das für Lagerung und/ oder Transport von klebrigen Lebensmitteln, wie Kuchen, Honig, Süßwaren und Fleisch, bestimmt ist, oder auch für andere Anwendungen, bei denen die bisher bekannten, bei Raumtemperatur zu Elastomeren vernetzenden Massen eingesetzt werden konnten, wie zur Isolierung von elektrischen oder elektronischen Vorrichtungen.

Die erfindungsgemäßen vernetzbaren Massen, die niedermolekulare, fluorhaltige Organosiliciumverbindungen enthalten, eignen sich insbesondere für Mineralölbeständigkeit und Oleophobie erfordernde Einsatzgebiete von Kautschuken und zeigen eine hohe Beständigkeit gegenüber unpolaren organischen flüssigen Kohlenwasserstoffen, wie z.B. Flugzeugbenzinen und Kraftstoffen.

Die erfindungsgemäßen additionsvernetzbaren Organopolysiloxanmassen enthalten vorzugsweise

(1) Organopolysiloxane mit mindestens 18 Siliciumatomen, die Reste mit aliphatischen Kohlenstoff-Kohlenstoff-Mehrfachbindungen aufweisen,
(2) Organopolysiloxane mit Si-gebundenen Wasserstoffatomen,
(3) die Anlagerung von Si-gebundenem Wasserstoff an aliphatische Mehrfachbindung fördernden Katalysator,
(4) mindestens eine niedermolekulare Organosiliciumverbindung mit 2 bis 17 Siliciumatomen aus Einheiten der Formel (I) und
(5) verstärkende und/oder nicht verstärkende Füllstoffe sowie gegebenenfalls weitere Stoffe.

Handelt es sich bei der erfindungsgemäßen Masse um eine additionsvernetzende 2-Komponenten-Siliconkautschukmasse, so können die beiden Komponenten der erfindungsgemäßen Siliconkautschukmassen alle Bestandteile in beliebigen Kombinationen und Mengenverhältnissen enthalten, mit der Maßgabe, daß eine Komponente nicht gleichzeitig die Bestandteile (1), (2) und (3) enthält.

Bei den Organopolysiloxanen (1) handelt es sich vorzugsweise um lineare, cyclische oder verzweigte Siloxane mit mindestens 18 Siliciumatomen, aus Einheiten der Formel
wobei

$$R^4{}_sR^5{}_tSiO_{(4-s-t)/2} \qquad (IV),$$

$R^4$ gleich oder verschieden sein kann und SiC-gebundener, aliphatisch ungesättigter Kohlenwasserstoffrest mit 2 bis 18 Kohlenstoffatomen bedeutet,
$R^5$ gleich oder verschieden sein kann und Wasserstoffatom oder gegebenenfalls substituierter, SiC-gebundener aliphatisch gesättigter Kohlenwasserstoffrest mit 1 bis 18 Kohlenstoffatomen bedeutet, wobei pro Siliciumatom maximal ein Rest R die Bedeutung von Wasserstoffatom haben kann,
s 0, 1 oder 2 ist und
t 0, 1, 2 oder 3 ist, mit der Maßgabe, daß die Summe s+t kleiner oder gleich 3 beträgt und mindestens zwei Reste $R^4$ pro Siloxanmolekül vorhanden sind.

Die Organopolysiloxane (1) besitzen vorzugsweise eine durchschnittliche Viskosität von $10^2$ bis $10^6$ $mm^2/s$ bei 25°C.

Vorzugsweise handelt es sich bei Rest $R^4$ um aliphatische Mehrfachbindung aufweisende Kohlenwasserstoffreste mit 2 bis 6 Kohlenstoffatomen, wie Vinyl-, Allyl-, Methallyl-, 2-Propenyl-, 3-Butenyl-, 4-Pentenylrest, 5-Hexenyl-, Butadienyl-, Hexadienyl-, Cyclopentenyl-, Cyclopentadienyl-, Cyclohexenyl-, Ethinyl-, Propargyl- und 2-Propinylrest, wobei der Vinyl- und Allylrest besonders bevorzugt sind.

Beispiele für Reste $R^5$ sind alle für Rest $R^1$ und $R^2$ angegebenen Beispiele.

Bei Rest $R^5$ handelt es sich vorzugsweise um gegebenenfalls substituierte aliphatisch gesättigte, monovalente Kohlenwasserstoffreste mit 1 bis 8 Kohlenstoffatomen, wobei der Methylrest besonders bevorzugt ist.

Besonders bevorzugt handelt es sich bei den Organopolysiloxanen (1) um lineare Organopolysiloxane mit einer Viskosität von 200 bis $10^5$ $mm^2/s$ bei 25°C der Struktur

$$(ViMe_2SiO_{1/2})\,(ViMeSiO)_{0-50}(Me_2SiO)_{30-2000}(ViMe_2SiO_{1/2})\ ,$$

wobei Me gleich Methyl- und Vi gleich Vinylrest bedeutet.

Als Organopolysiloxane (2), die Si-gebundene Wasserstoffatome aufweisen, werden vorzugsweise lineare, cyclische oder verzweigte Siloxane aus Einheiten der Formel

$$R^5_u H_v SiO_{\frac{4-u-v}{2}} \qquad (V)$$

eingesetzt, wobei

- $R^5$ gleich oder verschieden sein kann und die oben dafür angegebene Bedeutung hat,
- u 0, 1, 2 oder 3 ist und
- v 0, 1 oder 2 ist,

mit der Maßgabe, daß die Summe von u+v kleiner oder gleich 3 ist und durchschnittlich mindestens zwei Si-gebundene Wasserstoffatome je Molekül vorliegen.

Die Organopolysiloxane (2) besitzen vorzugsweise eine durchschnittliche Viskosität von 10 bis $2 \cdot 10^4$ $mm^2/s$ bei 25°C.

Bevorzugt ist die Verwendung eines drei oder mehr SiH-Bindungen pro Molekül enthaltenden Polyorganosiloxans (2). Bei Verwendung eines nur zwei SiH-Bindungen pro Molekül aufweisenden Bestandteils (2) enthält das Polyorganosiloxan (1) vorzugsweise mindestens drei aliphatische Kohlenstoff-Kohlenstoff-Mehrfachbindungen pro Molekül.

Es wird also vorzugsweise das Polyorganosiloxan (2) als Vernetzer eingesetzt. Der Wasserstoffgehalt des Vernetzers, welcher sich ausschließlich auf die direkt an Siliciumatome gebundenen Wasserstoffatome bezieht, liegt bevorzugt im Bereich von 0,002 bis 1,7 Gew.-% Wasserstoff, besonders bevorzugt zwischen 0,1 und 1,7 Gew.-% Wasserstoff.

Besonders bevorzugt handelt es sich bei den Organopolysiloxanen (2) um Organopolysiloxane mit einer Viskosität von 20 bis 1000 $mm^2/s$ bei 25°C.

Das Polyorganosiloxan (2) ist vorzugsweise in einer solchen Menge in der härtbaren Siliconkautschukmasse enthalten, daß das Molverhältnis von SiH-Gruppen zu Resten mit aliphatischer Kohlenstoff-Kohlenstoff-Mehrfachbindung der Komponente (1) zwischen 0,5 und 5, vorzugsweise zwischen 1,0 und 3,0, liegt.

Bestandteil (3) dient als Katalysator für die Additionsreaktion (Hydrosilylierung) zwischen den Resten mit aliphatischer Kohlenstoff-Kohlenstoff-Mehrfachbindung des Bestandteils (1) und den Si-gebundenen Wasserstoffatomen des Bestandteils (2). In der Literatur wurden bereits zahlreiche geeignete Hydrosilylierungskatalysatoren beschrieben. Prinzipiell können in den erfindungsgemäßen Massen alle üblicherweise in additionsvernetzenden Siliconkautschukmassen eingesetzten Hydrosilylierungskatalysatoren verwendet werden.

Als Hydrosilylierungskatalysator können Metalle, wie Platin, Rhodium, Palladium, Ruthenium und Iridium, vorzugsweise Platin, die gegebenenfalls auf feinteiligen Trägermaterialien, wie Aktivkohle, Aluminiumoxid oder Siliciumdioxid, fixiert sind, eingesetzt werden.

Vorzugsweise werden Platin und Platinverbindungen verwendet. Besonders bevorzugt werden solche Platinverbindungen, die in Polyorganosiloxanen löslich sind, eingesetzt. Als lösliche Platinverbindungen können beispielsweise die Platin-Olefin-Komplexe der Formeln $(PtCl_2 \cdot Olefin)_2$ und $H(PtCl_3 \cdot Olefin)$ verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel $(PtCl_2 \cdot C_3H_6)_2$, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie 1,3-Divinyltetramethyldisiloxan.

Der Hydrosilylierungskatalysator kann auch in mikroverkapselter Form eingesetzt werden, wobei der den Katalysator enthaltende und im Polyorganosiloxan unlösliche feinteilige Feststoff beispielsweise ein Thermoplast (Polyesterharze, Siliconharze) ist. Der Hydrosilylierungskatalysator kann auch in Form einer Einschlußverbindung, beispielsweise in einem Cyclodextrin, eingesetzt werden.

Die Menge des eingesetzten Hydrosilylierungskatalysators richtet sich nach der gewünschten Vernetzungsgeschwindigkeit sowie ökonomischen Gesichtspunkten und ist bekannt. Bei Verwendung gebräuchlicher Platin-Katalysatoren liegt der Gehalt der härtbaren Siliconkautschukmasse bezogen auf elementares Platin vorzugsweise im Bereich von 0,1 bis 500 Gew.-ppm, vorzugsweise zwischen 10 und 100 Gew.-ppm elementares Platin.

Vorzugsweise handelt es sich bei der erfindungsgemäß eingesetzten niedermolekularen Organosiliciumverbindung (4) um $[(CH_3)_3SiO]_3SiOH$, $\{[(CH_3)_3SiO]_2SiOH\}_2O$ und $\{[(CH_3)_3SiO]Si(OH)O\}_3$, wobei $[(CH_3)_3SiO]_3SiOH$ besonders bevorzugt ist.

Die erfindungsgemäßen zu Elastomeren vernetzbaren Organopolysiloxanmassen enthalten niedermolekulare Organosiliciumverbindung (4) in Mengen von vorzugsweise 0,01 bis 10,0 Gewichtsprozent, besonders bevorzugt 0,1 bis 5 Gewichtsprozent, jeweils bezogen auf das Gesamtgewicht der Organopolysiloxanmasse.

Beispiele für eingesetzte Füllstoffe (5) sind die oben als Beispiele genannten Füllstoffe.

Die erfindungsgemäßen, zu Elastomeren vernetzbaren Organopolysiloxanmassen enthalten Füllstoff in Mengen von vorzugsweise 1 bis 50 Gewichtsteilen, besonders bevorzugt 5 bis 40 Gewichtsteilen, jeweils bezogen auf 100 Gewichtsteile der erfindungsgemäßen vernetzbaren Organopolysiloxanmasse.

Während die Bestandteile (1) bis (5) notwendige Bestandteile der erfindungsgemäßen Siliconkautschukmasse sind, können wahlweise weitere Zusätze zu einem Anteil von bis zu 50 Gew.-%, vorzugsweise zwischen 1 und 40 Gew.-%, in der Siliconkautschukmasse enthalten sein. Diese Zusätze können z.B. Haftvermittler, wie z.B. Aminoalkoxysilane und lineare wie auch harzartige Methylsiloxane mit Si-gebundenem Wasserstoff, Hitzestabilisatoren, wie z. B. Übergangsmetallfettsäuresalze, wie Eisenoctoat, Übergangsmetallsilanolate, wie Eisensilanolat, Cer(IV)-Verbindungen, übergangsmetallhaltige Kieselsäuren oder Palladiumverbindungen, Inhibitoren, Pigmente, Farbstoffe und Weichmacher sein.

Beispiele für Weichmacher sind die oben für Weichmacher angegebenen Beispiele.

Enthalten sein können insbesondere Zusätze, die der gezielten Einstellung der Verarbeitungszeit und Vernetzungsgeschwindigkeit der härtbaren Siliconkautschukmasse dienen. Diese an sich bekannten Inhibitoren sind beispielsweise acetylenische Alkohole, wie Ethinylcyclohexanol und 2-Methyl-3butin-2-ol, Trialkylcyanurate, Alkylmaleate, wie Diallylmaleat und Dimethylmaleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, Benzotriazol, organische Sulfoxide, organische Amine und Amide, Phosphine, Phosphite, Nitrile, Diaziridine und Oxime.

Darüberhinaus enthalten die erfindungsgemäßen Massen vorzugsweise keine weiteren Stoffe.

Bei den jeweiligen zur Herstellung der erfindungsgemäßen Massen eingesetzten Komponenten kann es sich jeweils um eine einzelne Art einer solchen Komponente, wie auch um ein Gemisch aus mindestens zwei verschiedenen Arten einer solchen Komponente handeln.

Die Herstellung der erfindungsgemäßen durch Addition von Si-gebundenem Wasserstoff an aliphatische Kohlenstoff-Kohlenstoff-Mehrfachbindung vernetzbaren Organopolysiloxanmassen kann nach bekannten Verfahren erfolgen, wie beispielsweise durch einfaches Mischen der einzelnen Komponenten. Hierzu soll noch auf die bereits oben zitierte DE-A 44 05 245 verwiesen werden.

Die Einarbeitung der erfindungsgemäß eingesetzten niedermolekularen Organosiliciumverbindungen kann dabei auf verschiedenen Wegen des Zumischens erfolgen, z.B. in einem beliebigen Schritt des Mischens der einzelnen Komponenten der Silikonkautschukmasse. Vorteilhafterweise werden zur Bereitung der erfindungsgemäßen additionsvernetzbaren Massen die niedermolekularen Organosiliciumverbindungen während der Einarbeitung des Füllstoffes in die Masse eingemischt. Eine andere Möglichkeit ist das Aufbringen der niedermolekularen Organosiliciumverbindung auf den Füllstoff durch Mischen in einem Pulvermischer oder durch Mischen in einer Suspension von Füllstoff, inertem organischen Lösungsmittel und erfindungsgemäß eingesetzter niedermolekularer Organosiliciumverbindung und anschließendem Abziehen des organischen Lösungsmittels bis zur Trockene, um mit diesem anschließend, gleichermaßen mit dem Füllstoff als Träger, eingebracht zu werden. Eine weitere Möglichkeit besteht darin, daß die erfindungsgemäß eingesetzte niedermolekulare Organosiliciumverbindung durch chemische Reaktion auf dem Füllstoff erzeugt und auf diesem belassen wird.

Bei der Bereitung der erfindungsgemäßen Massen in zwei Komponenten wird vorzugsweise die erfindungsgemäß eingesetzte niedermolekulare Organosiliciumverbindung im letzten Mischschritt zugegeben.

Die erfindungsgemäßen durch Addition vernetzbaren Massen können bei den gleichen Bedingungen vernetzen gelassen werden wie die bisher bekannten durch Addition vernetzbaren Massen. Vorzugsweise wird die Vulkanisation bei einer Temperatur von 10 bis 200°C durchgeführt.

Die erfindungsgemäßen Organopolysiloxanmassen sowie die erfindungsgemäß daraus hergestellten Elastomere können für alle Zwecke eingesetzt werden, für die auch bisher zu Elastomeren vernetzbare Organopolysiloxanmassen bzw. Elastomere verwendet wurden. Insbesondere eignen sich die erfindungsgemäßen Organopolysiloxanmassen sowie die erfindungsgemäß daraus hergestellten Elastomere für Formartikel nach dem Spritzgußverfahren, Abformanwendungen, die einen verbesserten Weiterreißwiderstand erfordern, wie z.B. Babysauger, Flaschensauger, Dichtungen und Spezialformen.

Die erfindungsgemäßen vernetzbaren Massen, die niedermolekulare, fluorhaltige Organosiliciumverbindungen enthalten, eignen sich insbesondere für Mineralölbeständigkeit und Oleophobie erfordernde Einsatzgebiete von Kautschuken und zeigen eine hohe Beständigkeit gegenüber unpolaren organischen flüssigen Kohlenwasserstoffen, wie z.B. Flugzeugbenzinen und Kraftstoffen.

Die erfindungsgemäßen peroxidisch vernetzbaren Organopolysiloxanmassen enthalten vorzugsweise

(A) Organopolysiloxane aus Einheiten der allgemeinen Formel

$$R^6_r SiO_{\frac{4-r}{2}} \quad \text{(VI)},$$

worin

$R^6$ gleich oder verschieden sein kann und gegebenenfalls substituierter Kohlenwasserstoffrest bedeutet und
r 0, 1, 2 oder 3 ist und einen durchschnittlichen Zahlenwert von 1,9 bis 2,1 hat,

(B) verstärkende und/oder nichtverstärkende Füllstoffe,

(C) die Vernetzung bewirkendes Agens, wie beispielsweise organisches Peroxid,

(D) mindestens eine niedermolekulare Organosiliciumverbindung mit 2 bis 17 Siliciumatomen aus Einheiten der Formel (I)
sowie gegebenenfalls

(E) Additive.

Beispiele für Reste $R^6$ sind die für R oben angegebenen Beispiele, wobei gegebenenfalls substituierte Kohlenwasserstoffreste mit 1 bis 8 Kohlenstoffatomen bevorzugt und der Methyl-, Vinyl-, Phenyl- und 3,3,3-Trifluorpropylrest besonders bevorzugt sind.

Vorzugsweise sind an mindestens 70 Mol% der in dem Organopolysiloxan aus Einheiten der Formel (VI) enthaltenen Si-Atome Alkylreste, insbesondere Methylreste, gebunden. Enthalten die Organopolysiloxane (A) neben Si-gebundenen Methylund/oder 3,3,3-Trifluorpropylresten noch Si-gebundene Vinylund/oder Phenylreste, so handelt es sich bei letzteren bevorzugt um Mengen von 0,001 bis 30 Mol%.

Vorzugsweise bestehen die Organopolysiloxane (A) überwiegend aus Diorganosiloxaneinheiten. Die Endgruppen der Organopolysiloxane (A) können Trialkylsiloxygruppen, insbesondere der Trimethylsiloxyrest oder der Dimethylvinylsiloxyrest, sein; es können aber auch ein oder mehrere dieser Alkylgruppen durch Hydroxygruppen oder Alkoxygruppen, wie Methoxy- oder Ethoxyreste, ersetzt sein.

Bei den Organopolysiloxanen (A) kann es sich um Flüssigkeiten oder hochviskose Substanzen handeln. Vorzugsweise weisen die Organopolysiloxane (A) bei 25°C eine Viskosität zwischen $10^3$ und $10^8$ $mm^2/s$ auf.

Beispiele für verstärkende und nichtverstärkende Füllstoffe sind die oben für Füllstoffe angegebenen Beispiele.

Die erfindungsgemäßen, zu Elastomeren vernetzbaren Organopolysiloxanmassen enthalten Füllstoff (B) in Mengen von vorzugsweise 1 bis 200 Gewichtsteilen, besonders bevorzugt 30 bis 100 Gewichtsteilen, jeweils bezogen auf 100 Gewichtsteile Organopolysiloxan (A).

Bei der Komponente (C) kann es sich um allgemein ein die Vernetzung initiierendes oder bewirkendes Agens handeln, welches auch bisher in peroxidisch vernetzbaren Massen eingesetzt wurde.

Vorzugsweise werden als Komponente (C) bei den erfindungsgemäßen Organopolysiloxanmassen Peroxide, wie Dibenzoylperoxid, Bis-(2,4-dichlorbenzoyl)-peroxid, Dicumylperoxid und 2,5-Bis-(tert.-butylperoxy)-2,5-dimethylhexan sowie deren Gemische eingesetzt, wobei Bis-(2,4-dichlorbenzoyl)-peroxid und Dicumylperoxid bevorzugt sind.

Die erfindungsgemäßen zu Elastomeren vernetzbaren Organopolysiloxanmassen enthalten Peroxid (C) in Mengen von vorzugsweise 0,4 bis 2,0 Gewichtsprozent, besonders bevorzugt 0,7 bis 1,5 Gewichtsprozent, jeweils bezogen auf das Gesamtgewicht der Organopolysiloxanmasse.

Bei der als Komponente (D) erfindungsgemäß eingesetzten niedermolekularen Organosiliciumverbindung aus Einheiten der Formel (I) handelt es sich vorzugsweise um $[(CH_3)_3SiO]_3SiOH$, $\{[(CH_3)_3SiO]_2SiOH\}_2O$ und $\{[(CH_3)_3SiO]Si(OH)O\}_3$ sowie $[CF_3CH_2CH_2(CH_3)_2SiO]_3SiOH$, $\{[CF_3CH_2CH_2(CH_3)_2SiO]_2SiOH\}_2O$, $\{[CF_3CH_2CH_2(CH_3)_2SiO]Si(OH)O\}_3$ und HO- $[CF_3CH_2CH_2(CH_3)SiO]_n$-H mit n gleich 3 bis 15, wobei $[(CH_3)_3SiO]_3SiOH$, $[CF_3CH_2CH_2(CH_3)_2SiO]_3SiOH$ und HO-$[CF_3CH_2CH_2(CH_3)SiO]_n$-H mit n gleich 3 bis 15 besonders bevorzugt sind.

Die erfindungsgemäßen zu Elastomeren vernetzbaren Organopolysiloxanmassen enthalten niedermolekulare Organosiliciumverbindung (D) in Mengen von vorzugsweise 0,005 bis 30,0 Gewichtsprozent, besonders bevorzugt 0,1 bis 10,0 Gewichtsprozent, jeweils bezogen auf das Gesamtgewicht der Organopolysiloxanmasse.

Der jeweiligen Anwendung entsprechend können den erfindungsgemäßen zu Elastomeren vulkanisierbaren Organopolysiloxanmassen Additive (E), wie beipielsweise Verarbeitungshilfsmittel, wie etwa Weichmacher, Pigmente und Stabilisatoren, wie etwa Hitzstabilisatoren, zugesetzt werden.

Beispiele für Weichmacher und Hitzestabilisatoren sind die oben dafür angegebenen Beispiele.

Darüberhinaus enthalten die erfindungsgemäßen Massen vorzugsweise keine weiteren Stoffe.

Bei den jeweiligen zur Herstellung der erfindungsgemäßen Massen eingesetzten Komponenten kann es sich jeweils um eine einzelne Art einer solchen Komponente, wie auch um ein Gemisch aus mindestens zwei verschiedenen Arten einer solchen Komponente handeln.

Die Herstellung der erfindungsgemäßen peroxidisch vernetzbaren Organopolysiloxanmassen kann nach bekannten Verfahren erfolgen, wie beispielsweise durch einfaches Mischen der einzelnen Komponenten. Die Einarbeitung der erfindungsgemäß eingesetzten niedermolekularen Organosiliciumverbindungen kann dabei auf verschiedenen Wegen des Zumischens erfolgen, z.B. in einem beliebigen Schritt des Mischens der einzelnen Komponenten der Silikonkautschukmasse. Vorteilhafterweise werden zur Bereitung der erfindungsgemäßen peroxidisch vernetzbaren Massen die niedermolekularen Organosiliciumverbindungen während der Einarbeitung des Füllstoffes in die Masse eingemischt. Eine andere Möglichkeit ist das Aufbringen der erfindungsgemäß eingesetzten niedermolekularen Organosiliciumverbindung auf den Füllstoff durch Mischen in einem Pulvermischer oder durch Mischen in einer Suspension von Füllstoff, inertem organischen Lösungsmittel und niedermolekularer Organosiliciumverbindung und anschließendem Abziehen des organischen Lösungsmittels bis zur Trockene, um mit diesem anschließend, gleichermaßen mit dem Füllstoff als Träger, eingebracht zu werden. Eine weitere Möglichkeit besteht darin, daß die erfindungsgemäß eingesetzte niedermolekulare Organosiliciumverbindung durch chemische Reaktion auf dem Füllstoff erzeugt und auf diesem belassen wird.

Die erfindungsgemäßen peroxidisch vernetzbaren Massen können bei den gleichen Bedingungen vernetzen gelassen werden wie die bisher bekannten peroxidisch vernetzbaren Massen.

Die erfindungsgemäßen Organopolysiloxanmassen sowie die erfindungsgemäß daraus hergestellten Elastomere können für alle Zwecke eingesetzt werden, für die auch bisher zu Elastomeren vernetzbare Organopolysiloxanmassen bzw. Elastomere verwendet wurden. Insbesondere eignen sich die erfindungsgemäßen Organopolysiloxanmassen sowie die erfindungsgemäß daraus hergestellten Elastomere für Anwendungen, die einen verbesserten Weiterreißwiderstand erfordern, wie z.B. Schläuche, Kabelummantelungen, Kraftfahrzeugteile und Dichtungen.

Die erfindungsgemäßen vernetzbaren Massen, die niedermolekulare, fluorhaltige Organosiliciumverbindungen enthalten, eignen sich insbesondere für Mineralölbeständigkeit und Oleophobie erfordernde Einsatzgebiete von Kautschuken und zeigen eine hohe Beständigkeit gegenüber unpolaren organischen flüssigen Kohlenwasserstoffen, wie z.B. Flugzeugbenzinen und Kraftstoffen.

Die erfindungsgemäßen vernetzbaren Massen haben alle, unabhängig vom Vernetzungstyp den Vorteil, daß sie sich hervorragend verarbeiten lassen und sehr gute rheologische Eigenschaften zeigen, wobei auch die Lagerstabilität bei tiefen, aber auch bei erhöhten Temperaturen, von -60°C bis +80°C, der rheologischen Eigenschaften ausgezeichnet ist, d.h. die Stabilität eines eingestellten Niveaus der Fließgrenze und der Viskosität über die Lagerzeit wird deutlich erhöht, so daß im allgemeinen keine Verstrammung der unvernetzten Masse auftritt. Durch gezielten Zusatz der erfindungsgemäß eingesetzten niedermolekularen Organosiliciumverbindungen lassen sich diese rheologischen Eigenschaften, wie die Fließgrenze, in definiertem Maß kontrollieren.

Die häufig massiv störende Klebrigkeit der Masse, insbesondere während der Verarbeitung auf Walzwerken, wird unterdrückt und kann weitgehend eliminiert werden.

Ein weiterer Vorteil der erfindungsgemäßen Massen besteht darin, daß bereits mit geringen Mengen der erfindungsgemäß eingesetzten niedermolekularen organosiliciumverbindungen eine hohe Wirkung hinsichtlich der genannten Vorteile erzielt wird.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

In den Beispielen werden die folgenden Abkürzungen verwendet:

Me: Methylrest
Vi: Vinylrest

**Beispiel 1**

i) Herstellung der niedermolekularen Organosiliciumverbindung $(Me_3SiO)_3SiOH$

Eine Mischung aus 1834 g 1,3-Hexamethyldisiloxan, 559 g $SiCl_4$, 2,4 g (25 ppm) Tetramethylharnstoff (2,5 %ig in n-Hexan) und 24 g $PNCl_2$ (25%ig in Trichlorpropan) (=0,25 % $PNCl_2$) werden 46 Stunden bei Raumtemperatur gerührt. Nach Abziehen der flüchtigen Bestandteile bei 30°C/400 hPa am Rotationsverdampfer wird der Rückstand destilliert. Es werden 348 g einer farblosen, klaren Flüssigkeit mit einem Siedepunkt von 93-100°C bei 600 hPa erhalten. Die Zusammensetzung des erhaltenen Produktes wird über das $^{29}$Si-NMR-Spektrum bestimmt:

| | |
|---|---|
| 94 Mol-% | $(Me_3SiO)_3SiCl$ und |
| 6 Mol-% | $(Me_3SiO)_4Si$ |

Die Ausbeute beträgt 26%.

348 g der so erhaltenen Mischung aus 94 Mol-% $(Me_3SiO)_3SiCl$ und 6 Mol-% $(Me_3SiO)_4Si$ werden nun mit 105,7 g Triethylamin und 1670 g n-Hexan vermischt und bei Raumtemperatur mit 84,9 g Wasser versetzt. Man läßt 18 Stunden bei Raumtemperatur rühren, erhitzt anschließend eine Stunde zum Rückfluß, wäscht mit Wasser und trocknet die organische Phase über Natriumsulfat. Nach Abziehen der flüchtigen Bestandteile bei 30°C/700 hPa am Rotationsverdampfer wird der Rückstand über eine Füllkörper-Kolonne destilliert. Es werden 267 g einer farblosen, klaren Flüssigkeit mit einem Siedepunkt von 73-75°C bei 500 hPa erhalten. Die Zusammensetzung des erhaltenen Produktes wird über das $^{29}Si$-NMR-Spektrum bestimmt:

| | |
|---|---|
| 96 Mol-% | $(Me_3SiO)_3SiOH$ und |
| 4 Mol-% | $(Me_3SiO)_4Si$ |

Herstellung einer Grundmasse für additionsvernetzende Massen

In einem 5 1 Laborkneter werden 500 g eines mit Vinylgruppen terminierten Dimethylpolysiloxans mit einer Viskosität von 20000 $mm^2/s$ vorgelegt, auf 150°C aufgeheizt und mit 390 g einer mit Hexamethyldisilazan gemäß der bereits eingangs genannten DE 38 39 900 A hydrophobierten Kieselsäure als Füllstoff versetzt. Durch Kneten bei 1000 hPa bei 150°C werden während einer Stunde flüchtige Bestandteile entfernt. Es entsteht eine sehr steife Masse, die anschließend mit 410 g des oben genannten Dimethylpolysiloxans verdünnt wird. Aus dieser Grundmasse werden anschließend in einem Planetenmischer eine A- sowie eine B-Komponente hergestellt.

Zur Herstellung der A-Komponente werden nun innerhalb von 30 Minuten bei Raumtemperatur und Normaldruck 380 g der oben beschriebenen Grundmasse, 0,2 g Pt-Komplex mit Divinyltetramethyldisiloxan, 1,0 g der oben unter i) hergestellten niedermolekularen Organosiliciumverbindung sowie 1,0 g Ethinylcyclohexanol als Inhibitor vermischt.

Zur Herstellung der B-Komponente werden dann innerhalb von 30 Minuten bei Raumtemperatur und Normaldruck 380 g der oben beschriebenen Grundmasse, 18 g lineares Methyl-H-Polysiloxan mit 0,5 Mol-% Si-H und einer Viskosität von 400 $mm^2/s$ als Vernetzer, 1,0 g Ethinylcyclohexanol als Inhibitor und 1,0 g der oben unter i) hergestellten Organosiliciumverbindung vermischt.

Die Komponenten A und B werden jeweils in einem Gewichtsverhältnis von 1:1 vermischt und bei einer Temperatur von 160 °C vernetzen gelassen, wobei die Topfzeit und die Lagerstabilität wie folgt bestimmt wird:

Topfzeit (Schnelltest):

Das Fließverhalten der Masse nach Lagerzeit wird durch nachfolgend beschriebene Messung charakterisiert. Ein Tropfen von 0,6 g der zu untersuchenden Masse wird in die Mitte einer transparenten Hostaphan$^R$-Folie (PETP; käuflich erhältlich bei der Firma Kalle/Hoechst, Deutschland) aufgebracht. Zur späteren Auswertung befindet sich diese durchsichtige Hostaphan-Folie auf Millimeterpapier. Über den Tropfen Masse wird eine zweite Hostaphan-Folie gelegt und anschließend der Tropfen Masse mit einer Scheibe von 30 mm Durchmesser und einem Gewicht von 500 g belastet. Der Tropfen Masse wird zu einer flachen Scheibe gedrückt. Gemessen wird der größte und der kleinste Durchmesser der Scheibe, hiervon wird der Mittelwert gebildet: Topfzeit-0 [mm]. Zusätzlich wird analog die Topfzeit eines weiteren Tropfens Masse bestimmt, die jedoch noch während 30 Minuten bei 70 °C gelagert wurde: Topfzeit-70° [mm]. Der Wert der Topfzeit wird als die Differenz:

Topfzeit [mm] = Topfzeit-0 [mm] minus Topfzeit-70° [mm] angegeben.

Der Test kann mit der A- oder B-Komponente durchgeführt werden. Die in Tabelle 1 angegebenen Werte beziehen sich auf die empfindlichere B-Komponente.

Lagerstabilität

Die Lagerstabilität der Viskosität wird wie folgt bestimmt. Die Fließkurve der Masse wird mit einem Platte/Kegeksystem (Durchmesser 30 mm, Kegelabstand 50 µm) (Rheolab MC 100, Fa. Physica, Stuttgart) von einem Schergefälle 0 bis 1 1/sec aufgenommen; notiert wird der Wert bei einem Schergefälle von 0,81 1/sec: Visk.-0.

Zusätzlich wird die Viskosität analog nach einer Lagerung bei 150 °C / 16 Stunden vermessen: Visk.-150°.

Angegeben wird die relative Änderung der Viskosität verursacht durch die Lagerung bei 150 °C / 16 Stunden:

Lagerstabilität [%] = [(Visk.-150° - Visk.-0) dividiert durch Visk.-0] multipliziert mit 100.

Die Ergebnisse finden sich in Tabelle 1.

**Beispiel 2**

ii) Herstellung der niedermolekularen Organosiliciumverbindung $(Me_3SiO)_3SiOH$

50 g Wasser und 50 g Hexamethyldisilazan werden intensiv mit 100 g einer pyrogenen Kieselsäure mit einer spezifischen Oberfläche nach BET von 300 $m^2/g$ (käuflich erhältlich bei der Wacker-Chemie GmbH unter der Bezeichnung "WACKER HDK$^R$ T30) vermischt, für eine Stunde gerührt und anschließend für 24 Stunden bei 80°C gelagert. Das pulvrige Reaktionsgemisch wird anschließend bei 140°C während 2 Stunden in einem schwachen Stickstoffstrom von leichtflüchtigen Verbindungen gereinigt. Durch destillatives Austreiben in trockenem Stickstoff bei 220°C während 8 Stunden werden, nach Abtrennen eines geringen Anteils einer wässrigen Phase, 17 g einer klaren Flüssigkeit erhalten, die gemäß Gaschromatographie 83 % $(Me_3SiO)_3SiOH$ enthält.

Mit der gemäß ii) erhaltenen niedermolekularen Organosiliciumverbindung wird wie in Beispiel 1 beschrieben verfahren.

Angaben über die Topfzeit und die Lagerstabilität finden sich in Tabelle 1.

**Beispiel 3**

iii) Herstellung der niedermolekularen Organosiliciumverbindung $(Me_3SiO)_3SiOH$

50 g Wasser und 50 g Hexamethyldisilzan und 100 g einer pyrogenen Kieselsäure mit einer spezifischen Oberfläche nach BET von 300 $m^2/g$ (käuflich erhältlich bei der Wacker-Chemie GmbH unter dem Namen "WACKER HDK$^R$ T30") werden unter Scheren in 500 g Hexamethyldisiloxan suspendiert und anschließend für 24 Stunden bei 80°C unter Rühren umgesetzt. Anschließend wird bei Normaldruck bis 120°C überschüssiges Hexamethyldisiloxan abdestilliert. Das so erhaltene pulvrige Reaktionsgemisch wird anschließend bei 140°C während 2 Stunden in einem schwachen Stickstoffstrom getrocknet. Durch destillatives Austreiben in trockenem Stickstoff bei 220°C während 8 Stunden werden, nach Abtrennen der wässrigen Phase, 15 g einer klaren Flüssigkeit erhalten, die gemäß Gaschromatographie 82 % $(Me_3SiO)_3SiOH$ enthält.

Mit der gemäß iii) erhaltenen niedermolekularen Organosiliciumverbindung wird wie in Beispiel 1 beschrieben verfahren.

Angaben über die Topfzeit und die Lagerstabilität finden sich in Tabelle 1.

Tabelle 1

| Beispiel | Topfzeit (mm) | Lagerstabilität (%) |
|---|---|---|
| 1 | 3 | 45 |
| 2 | 3 | 50 |
| 3 | 3 | 50 |
| V1 | 5 | 170 |

**Vergleichsbeispiel 1**

Analog der in Beispiel 1 beschriebenen Verfahrensweise wird eine additionsvernetzende Masse hergestellt mit der Abänderung, daß keine niedermolekulare Verbindung $(Me_3SiO)_3SiOH$ eingesetzt wird.

Angaben über die Topfzeit und die Lagerstabilität finden sich in Tabelle 1.

**Beispiel 4**

iv) Herstellung der niedermolekularen Organosiliciumverbindung $[CF_3CH_2CH_2(CH_3)_2SiO]_3SiOH$

Eine Mischung aus 3620 g 1,3-Bis(3,3,3-trifluorpropyl)-1,1,3,3-tetramethyldisiloxan, 559 g $SiCl_4$, 2,4 g (25 ppm) Tetramethylharnstoff (2,5 %ig in n-Hexan) und 24 g $PNCl_2$ (25%ig in Trichlorpropan) (=0,25 % $PNCl_2$) werden 46 Stunden bei Raumtemperatur gerührt. Nach Abziehen der flüchtigen Bestandteile bei 30°C/100 hPa am Rotationsverdampfer wird der Rückstand destilliert. Es werden 654 g einer farblosen, klaren Flüssigkeit mit einem Siedepunkt von 87-96°C bei 50 hPa erhalten. Die Zusammensetzung des erhaltenen Produktes wird über das $^{29}Si$-NMR-Spektrum bestimmt:

| | |
|---|---|
| 87 Mol-% | $[CF_3CH_2CH_2(CH_3)_2SiO]_3SiCl$ und |
| 13 Mol-% | $[CF_3CH_2CH_2(CH_3)_2SiO]_4Si$ |

654 g der so erhaltenen Mischung aus 87 Mol-% $[CF_3CH_2CH_2(CH_3)_2SiO]_3SiCl$ und 13 Mol-% $[CF_3CH_2CH_2(CH_3)_2SiO]_4Si$ werden nun mit 105,7 g Triethylamin und 1670 g n-Hexan vermischt und bei Raumtemperatur mit 84,9 g Wasser versetzt. Man läßt 18 Stunden bei Raumtemperatur rühren, erhitzt anschließend eine Stunde zum Rückfluß, wäscht mit Wasser und trocknet die organische Phase über Natriumsulfat. Nach Abziehen der flüchtigen Bestandteile bei 30°C/100 hPa am Rotationsverdampfer wird der Rückstand über eine Füllkörper-Kolonne destilliert. Es werden 507 g einer farblosen, klaren Flüssigkeit mit einem Siedebereich von 67-76°C bei 40 hPa erhalten. Die Zusammensetzung des erhaltenen Produktes wird über das $^{29}Si$-NMR-Spektrum bestimmt:

| | |
|---|---|
| 87 Mol-% | $[CF_3CH_2CH_2(CH_3)_2SiO]_3SiOH$ und |
| 13 Mol-% | $[CF_3CH_2CH_2(CH_3)_2SiO]_4Si$ |

Herstellung einer peroxidisch vernetzbaren Grundmasse für Fluorsiliconkautschuk

244 g eines vinyldimethyl-endständigen Poly-(3,3,3-trifluorpropyl-methyl-siloxans) mit einer Brabender-Viskosität von 550 N/m, 2,5 g eines mit Trimethylsilylgruppen terminierten Poly-(3,3,3-trifluorpropyl-methyl-siloxans) mit einem Gehalt von 20 Mol-% an (ViMeSiO)-Einheiten und einer Viskosität von 1 000 $mm^2/s$, 0,4 g 1,3-Divinyltetramethyldisilazan und 62 g einer mit Bis-(3,3,3-trifluorpropyl)-tetramethyl-disilazan oberflächenmodifizierten Kieselsäure werden während 30 Minuten an einem Kneter gemischt. Nach Aufheizen während 2 Stunden auf 150°C werden 1,2 g der oben unter iv) hergestellten niedermolekularen Organosiliciumverbindung zugegeben, 45 Minuten geknetet und abgekühlt. Anschließend wird auf der Walze die Verarbeitbarkeit, d.h. ohne Klebrigkeit, geprüft.

<u>Verarbeitbarkeit. d.h. Prüfung auf frei von Klebrigkeit:</u>

Dabei werden 60 g der Masse auf einem 2-Walzenstuhl zu einem Walzfell ausgewalzt und anschließend zu einer "Puppe" wieder aufgerollt, letzteres händisch. Diese Puppe wird anschliessend wieder zu einem Walzfell ausgewalzt. Dieser Vorgang wird mehrfach wiederholt. Gezählt wird, wie oft dieser Vorgang wiederholbar ist, ohne daß das Walzfell auf der Walze kleben bleibt und die weitere Verarbeitbarkeit stört:
Anzahl der Puppen = Maß für Verarbeitbarkeit ohne Klebrigkeit.

Die Ergebnisse finden sich in Tabelle 2.

**Beispiel 5**

Analog der in Beispiel 4 beschriebenen Arbeitsweise wird eine peroxidisch vernetzbare Grundmasse für Fluorsiliconkautschuk hergestellt, jedoch ohne Herstellung von $[CF_3CH_2CH_2(CH_3)_2SiO]_3SiOH$; anstelle von $[CF_3CH_2CH_2(CH_3)_2SiO]_3SiOH$ wird in die Masse als niedermolekulare Organosiliciumverbindung HO-$[CF_3CH_2CH_2(CH_3)SiO]_xH$ mit einer Viskosität von 10 $mm^2/s$ zugefügt.

Angaben über die Verarbeitbarkeit und Klebrigkeit finden sich in Tabelle 2.

Tabelle 2

| Beispiel | Verarbeitbarkeit (Anzahl der Puppen ohne Klebrigkeit) |
|---|---|
| 4 | 19 |
| 5 | 20 |
| V2 | 1 |

**Vergleichsbeispiel 2**

Analog der in Beispiel 4 beschriebenen Arbeitsweise wird eine peroxidisch vernetzbare Grundmasse für Fluorsiliconkautschuk hergestellt, jedoch ohne die Herstellung von $[(CF_3CH_2CH_2)(CH_3)_2SiO]_3SiOH$ und ohne Einarbeitung von $[(CF_3CH_2CH_2)(CH_3)_2SiO]_3SiOH$ in die HTV-Masse.

Angaben über die Verarbeitbarkeit und Klebrigkeit finden sich in Tabelle 2.

**Beispiel 6**

Herstellung einer Grundmasse für kondensationsvernetzende RTV-I-Masse:

Zu einem Gemisch aus 2000 g eines beidseitig OH-endständigen Polydimethylsiloxans mit einer Viskosität von 20 000 $mm^2/s$ und 400 g eines beidseitig OH-endständigen Polydimethylsiloxans mit einer Viskosität von 80 000 $mm^2/s$ werden in einem Labormischer unter Ausschluß von Feuchtigkeit 30 g niedermolekulare Verbindung $(Me_3SiO)_3SiOH$, deren Herstellung in Beispiel 1 unter i) beschrieben ist, 680 g einer hydrophoben Kieselsäure, hergestellt wie nach DE-A 38 39 900 (Wacker-Chemie GmbH, Schuster et al) und zusätzlich 15 g n-Propanol als Weichmacher und 154 g Tetraacetoxysilan als Vernetzer sowie 1,5 g Dibutylzinndiacetat als Vernetzungskatalysator zugefügt.

Die Strukturviskosität und Fließgrenze der so erhaltenen Masse wird bestimmt. Dabei werden 5 g der Masse in die Mitte einer transparenten Hostaphan-Folie aufgebracht. Zur späteren Auswertung befindet sich diese durchsichtige Hostaphan-Folie auf Millimeterpapier. Während der Vernetzungszeit fließt die Masse bis zur Vernetzung bei nicht ausreichender Fließgrenze auseinander. Gemessen wird der mittlere Durchmesser der zerflossenen Masse: D [cm]

Das Ergebnis findet sich in Tabelle 3.

Tabelle 3:

| Beispiel | Fließgrenze [cm] |
|---|---|
| 6 | 2 |
| V3 | 5,5 |

**Vergleichsbeispiel 3**

Analog der in Beispiel 6 beschriebenen Arbeitsweise wird eine kondensationsvernetzbare Grundmasse hergestellt, jedoch ohne Einarbeitung von $(Me_3SiO)_3SiOH$.

Angaben über die Fließgrenze finden sich in Tabelle 3.

**Patentansprüche**

1. Vernetzbare Massen auf der Basis von Organopolysiloxanen, dadurch gekennzeichnet, daß sie zusätzlich zu Organopolysiloxanen mindestens eine niedermolekulare organosiliciumverbindung mit 2 bis 17 Siliciumatomen aus Einheiten der Formel

$$R^1_a R^2_b (OR^3)_c SiO_{4-(a+b+c)/2}$$

enthalten, wobei

$R^1$ gleich oder verschieden sein kann aliphatisch gesättigter, SiC-gebundener Kohlenwasserstoffrest mit 1 bis 18 Kohlenstoffatomen bedeutet,
$R^2$ gleich oder verschieden sein kann und aliphatisch gesättigter, mit Halogenatomen substituierter SiC-gebundener Kohlenwasserstoffrest mit 1 bis 18 Kohlenstoffatomen bedeutet,
$R^3$ Wasserstoffatom bedeutet,
a 0, 1, 2 oder 3 ist,
b 0, 1, 2 oder 3 ist,
c 0, 1, 2 oder 3 ist und

die Summe aus a, b und c in Formel (I) kleiner oder gleich 3 ist, mit der Maßgabe, daß niedermolekulare Organosiliciumverbindungen aus Einheiten der Formel (I) mit b=0 mindestens eine Einheit der Formel (I), in der a gleich 0 oder 1 ist, und mindestens eine Einheit der Formel (I), in der a gleich 3 ist, in Mengen von 0,1 bis 5 Gewichts-%, bezogen auf das Gesamtgewicht der vernetzbaren Masse, aufweisen.

2. Vernetzbare Massen gemäß Anspruch 1, dadurch gekennzeichnet, daß es sich um unter Ausschluß von Wasser lagerfähige, bei Zutritt von Wasser bei Raumtemperatur zu Elastomeren vernetzbare organopolysiloxanmassen handelt, die

   (a) kondensationsfähige Gruppen aufweisendes Organopolysiloxan,

(b) organosiliciumverbindung mit mindestens drei Si-gebundenen hydrolysierbaren Resten,
(c) Kondensationskatalysator,
(d) niedermolekulare Organosiliciumverbindung mit 2 bis 17 Siliciumatomen aus Einheiten der Formel (I) in Mengen von 0,1 bis 5 Gewichts -%, bezogen auf das Gesamtgewicht der vernetzbaren Masse,

und gegebenenfalls weitere Stoffe
enthalten.

**3.** Vernetzbare Massen gemäß Anspruch 2, dadurch gekennzeichnet, daß es sich bei Komponente (d) um $[(CH_3)_3SiO]_3SiOH$, $\{[(CH_3)_3SiO]_2SiOH\}_2O$ und $\{[(CH_3)_3SiO]Si(OH)O)\}_3$ handelt.

**4.** Vernetzbare Massen gemäß Anspruch 1, dadurch gekennzeichnet, daß es sich um additionsvernetzbare organopolysiloxanmassen handelt, die

(1) Organopolysiloxane mit mindestens 18 Siliciumatomen, die Reste mit aliphatischen Kohlenstoff-Kohlenstoff-Mehrfachbindungen aufweisen,
(2) Organopolysiloxane mit Si-gebundenen Wasserstoffatomen,
(3) die Anlagerung von Si-gebundenem Wasserstoff an aliphatische Mehrfachbindung fördernden Katalysator,
(4) mindestens eine niedermolekulare Organosiliciumverbindung mit 2 bis 17 Siliciumatomen aus Einheiten der Formel (I) in Mengen von 0,1 bis 5 Gewichts -%, bezogen auf das Gesamtgewicht der vernetzbaren Masse, und
(5) verstärkende und/oder nicht verstärkende Füllstoffe sowie gegebenenfalls weitere Stoffe

enthalten.

**5.** Vernetzbare Massen gemäß Anspruch 4, dadurch gekennzeichnet, daß es sich bei Komponente (4) um $[(CH_3)_3SiO]_3SiOH$, $\{[(CH_3)_3SiO]_2SiOE\}_2O$ und $\{[(CH_3)_3SiO]Si(OH)O\}_3$ handelt.

**6.** Vernetzbare Massen gemäß Anspruch 1, dadurch gekennzeichnet, daß es sich um peroxidisch vernetzbare Organopolysiloxanmassen handelt, die

(A) organopolysiloxane aus Einheiten der allgemeinen Formel

$$R^6_rSiO_{\frac{4-r}{2}} \quad (VI),$$

worin

$R^6$ gleich oder verschieden sein kann und gegebenenfalls substituierter Kohlenwasserstoffrest bedeutet und
r 0, 1, 2 oder 3 ist und einen durchschnittlichen Zahlenwert von 1,9 bis 2,1 hat,

(B) verstärkende und/oder nichtverstärkende Füllstoffe,
(C) die Vernetzung bewirkendes Agens,
(D) mindestens eine niedermolekulare Organosiliciumverbindung mit 2 bis 17 Siliciumatomen aus Einheiten der Formel (I) in Mengen von 0,1 bis 5 Gewichts -%, bezogen auf das Gesamtgewicht der vernezbaren Masse, sowie gegebenenfalls
(E) Additive

enthalten.

**7.** Vernetzbare Massen gemäß Anspruch 6, dadurch gekennzeichnet, daß es sich bei Komponente (D) um $[(CH_3)_3SiO]_3SiOH$,$\{[(CH_3)_3SiO]_2SiOH\}_2O$ und $\{[(CH_3)_3SiO]Si(OH)O\}_3$ sowie $[CF_3CH_2CH_2(CH_3)_2SiO]_3SiOH$, $\{[CF_3CH_2CH_2(CH_3)_2SiO]_2SiOH\}_2O$, $\{[CF_3CH_2CH_2(CH_3)_2SiO]Si(OH)O)_3$ und $HO[CF_3CH_2CH_2(CH_3)SiO]_n$-H mit n gleich 3 bis 15 handelt

## Claims

1. Crosslinkable, organopolysiloxane-based compositions, characterized in that they comprise, in addition to organopolysiloxanes, at least one low molecular weight organosilicon compound having from 2 to 17 silicon atoms and comprising units of the formula

$$R^1{}_aR^2{}_b(OR^3)_cSiO_{4-(a+b+c)/2} \qquad (I)$$

where

- $R^1$ can be identical or different and are each an aliphatically saturated, SiC-bonded hydrocarbon radical having from 1 to 18 carbon atoms,
- $R^2$ can be identical or different and are each an aliphatically saturated, halogen-substituted SiC-bonded hydrocarbon radical having from 1 to 18 carbon atoms,
- $R^3$ are each a hydrogen atom,
- a is 0, 1, 2 or 3,
- b is 0, 1, 2 or 3,
- c is 0, 1, 2 or 3 and

the sum of a, b and c in formula (I) is less than or equal to 3, with the proviso that low molecular weight organosilicon compounds comprising units of the formula (I) where b=0 contains at least one unit of the formula (I) in which a is 0 or 1 and at least one unit of the formula (I) in which a is 3, in amounts of from 0.1 to 5% by weight, based on the overall weight of the crosslinkable composition.

2. Crosslinkable compositions according to Claim 1, characterized in that they are storage-stable when water is excluded, are crosslinkable at room temperature to give elastomers when water is admitted and comprise

(a) an organopolysiloxane having condensable groups,
(b) an organosilicon compound containing at least three Si-bonded hydrolysable radicals,
(c) a condensation catalyst,
(d) a low molecular weight organosilicon compound having from 2 to 17 silicon atoms and comprising units of the formula (I), in amounts of from 0.1 to 5% by weight, based on the overall weight of the crosslinkable composition

and, if desired, further materials.

3. Crosslinkable compositions according to Claim 2, characterized in that component (d) is $[(CH_3)_3SiO]_3SiOH$, $\{[(CH_3)_3SiO]_2SiOH\}_2O$ and $\{[(CH_3)_3SiO]Si(OH)O\}_3$.

4. Crosslinkable compositions according to Claim 1, characterized in that they are additioncrosslinkable organopolysiloxane compositions comprising

(1) organopolysiloxanes having at least 18 silicon atoms and containing radicals having aliphatic carboncarbon multiple bonds,
(2) organopolysiloxanes containing Si-bonded hydrogen atoms,
(3) a catalyst which promotes the addition of Si-bonded hydrogen onto aliphatic multiple bonds,
(4) at least one low molecular weight organosilicon compound having from 2 to 17 silicon atoms and comprising units of the formula (I), in amounts of from 0.1 to 5% by weight, based on the overall weight of the crosslinkable composition and
(5) reinforcing and/or nonreinforcing fillers and also, if desired, further materials.

5. Crosslinkable compositions according to Claim 4, characterized in that component (4) is $[(CH_3)_3SiO]_3SiOH$, $\{[(CH_3)_3SiO]_2SiOH)\}_2O$ and $\{[(CH_3)_3SiO]Si(OH)O\}_3$.

6. Crosslinkable compositions according to Claim 1, characterized in that they are peroxidically crosslinkable organopolysiloxane compositions comprising

(A) organopolysiloxanes comprising units of the formula

$$R^6_rSiO_{\frac{4-r}{2}} \qquad (VI)$$

where

$R^6$ can be identical or different and are each a substituted or unsubstituted hydrocarbon radical and
r is 0, 1, 2 or 3 and has an average numerical value of from 1.9 to 2.1,

(B) reinforcing and/or nonreinforcing fillers,
(C) an agent which effects crosslinking,
(D) at least one low molecular weight organosilicon compound having from 2 to 17 silicon atoms and comprising units of the formula (I), in amounts of from 0.1 to 5% by weight, based on the overall weight of the crosslinkable composition
and, if desired,
(E) additives.

**7.** Crosslinkable compositions according to Claim 6, characterized in that component (D) is
$[(CH_3)_3SiO]_3SiOH$, $\{[(CH_3)_3SiO]_2SiOH\}_2O$ and
$\{[(CH_3)_3SiO]Si(OH)O\}_3$ or $[CF_3CH_2CH_2(CH_3)_2SiO]_3SiOH$,
$\{[CF_3CH_2CH_2(CH_3)_2SiO]_2SiOH\}_2O$,
$\{[CF_3CH_2CH_2(CH_3)_2SiO]Si(OH)O\}_3$ and
$HO-[CF_3CH_2CH_2(CH_3)SiO]_n-H$ where n is from 3 to 15.

## Revendications

**1.** Masses réticulables à base d'organopolysiloxanes, caractérisées en ce qu'elles contiennent, en plus des organopolysiloxanes, au moins un composé organosilicié de faible poids moléculaire comprenant 2 à 17 atomes de silicium, constitué d'unités de formule

$$R^1_aR^2_b(OR^3)_cSiO_{4-(a+b+c)/2} \qquad (I)$$

où

$R^1$ peut être identique ou différent et signifie un radical hydrocarboné aliphatiquement saturé, lié par SiC, comprenant 1 à 18 atomes de carbone,
$R^2$ peut être identique ou différent et signifie un radical hydrocarboné aliphatiquement saturé, substitué par des atomes d'halogène, lié par SiC, comprenant 1 à 18 atomes de carbone
$R^3$ signifie un atome d'hydrogène
a représente 0, 1, 2 ou 3,
b représente 0, 1, 2 ou 3,
c représente 0, 1, 2 ou 3 et

la somme de a, b et c dans la formule (I) est inférieure ou égale à 3, sous réserve que les composés organosiliciés de faible poids moléculaire, constitués d'unités de formule -(I) avec b = 0, présentent au moins une unité de formule (I) dans laquelle a est égal à 0 ou 1 et au moins une unité de formule (I) dans laquelle a est égal à 3, en des quantités de 0,1 à 5% en poids, par rapport au poids total de la masse réticulable.

**2.** Masses réticulables selon la revendication 1, caractérisées en ce qu'il s'agit de masses d'organopolysiloxanes entreposables à l'abri de l'eau, réticulables en élastomères en cas d'entrée d'eau à température ambiante, qui contiennent

(a) un organopolysiloxane présentant des groupements condensables,

(b) un composé organosilicié comprenant au moins trois radicaux hydrolysables liés par Si,
(c) un catalyseur de condensation,
(d) un composé organosilicié de faible poids moléculaire comprenant 2 à 17 atomes de silicium, constitué d'unités de formule (I), en des quantités de 0,1 à 5% en poids par rapport au poids total de la masse réticulable, et le cas échéant d'autres substances.

**3.** Masses réticulables selon la revendication 2, caractérisées en ce qu'il s'agit, pour le composant (d) de $[(CH_3)_3SiO]_3SiOH$, de $\{[(CH_3)_3SiO]_2SiOH\}_2O$ et de $\{[(CH_3)_3SiO]Si(OH)O\}_3$.

**4.** Masses réticulables selon la revendication 1, caractérisées en ce qu'il s'agit de masses d'organopolysiloxanes réticulables par addition qui contiennent

(1) des organopolysiloxanes comprenant au moins 18 atomes de silicium, qui présentent des radicaux avec des liaisons multiples aliphatiques carbone-carbone,
(2) des organopolysiloxanes avec des atomes d'hydrogène liés par Si,
(3) un catalyseur favorisant la fixation d'hydrogène lié par Si sur la liaison multiple aliphatique,
(4) au moins un composé organosilicié de faible poids moléculaire comprenant 2 à 17 atomes de silicium, constitué d'unités de formule (I), en des quantités de 0,1 à 5% en poids par rapport au poids total de la masse réticulable et
(5) des charges renforçantes et/ou non renforçantes, ainsi que le cas échéant d'autres substances.

**5.** Masses réticulables selon la revendication 4, caractérisées en ce qu'il s'agit, pour le composant (4), de $[(CH_3)_3SiO]_3SiOH$, de $\{[(CH_3)_3SiO]_2SiOH\}_2O$ et de $\{[(CH_3)_3SiO]Si(OH)O\}_3$.

**6.** Masses réticulables selon la revendication 1, caractérisées en ce qu'il s'agit de masses d'organopolysiloxanes réticulables par un peroxyde, qui contiennent

(A) des organopolysiloxanes constitués d'unités de formule générale

$$R^6_r SiO_{\frac{4-r}{2}} \qquad \text{(VI)}$$

où

$R^6$ peut être identique ou différent et signifie un radical hydrocarboné le cas échéant substitué et
r représente 0, 1, 2 ou 3 et a une valeur numérique moyenne de 1,9 à 2,1,

(B) des charges renforçantes et/ou non renforçantes
(C) un agent provoquant la réticulation
(D) au moins un composé organosilicié de faible poids moléculaire comprenant 2 à 17 atomes de silicium, constitué d'unités de formule (I), en des quantités de 0,1 à 5% en poids par rapport au poids total de la masse réticulable ainsi que, le cas échéant,
(E) des additifs.

**7.** Masses réticulables selon la revendication 6, caractérisées en ce qu'il s'agit, pour le composant (D), de $[(CH_3)_3SiO]_3SiOH$, de $\{[(CH_3)_3SiO]_2SiOH\}_2O$ et de $\{[(CH_3)_3SiO]Si\ (OH)O\}_3$, ainsi que de $[CF_3CH_2CH_2(CH_3)_2SiO]_3SiOH$, de $\{[CF_3CH_2CH_2\ (CH_3)_2SiO]_2SiOH\}_2O$, de $\{[CF_3CH_2CH_2(CH_3)_2SiO]Si(OH)O\}_3$ et de $HO-[CF_3CH_2CH_2(CH_3)SiO]_n-H$, avec n égal à 3 jusqu'à 15.